# EUROPÄISCHE PATENTANMELDUNG

(11) **EP 3 076 059 A1**
(43) Veröffentlichungstag der Anmeldung: **05.10.2016**
(21) Anmeldenummer: 15162463.2
(22) Anmeldetag: 02.04.2015
(51) Int. Cl.: F16K 31/122, F02C 7/232, F23K 5/06

(54) **HYDRAULISCHER VENTILANTRIEB FÜR MEHRFACHVENTIL**

(71) Anmelder: Siemens Aktiengesellschaft, 80333 München (DE)
(72) Erfinder: Baßmann, Carsten, 41466 Neuss (DE); Claßen, Sebastian, 45128 Essen (DE)

(57) **Zusammenfassung**

Die Erfindung betrifft ein Mehrfachventil (1) mit mindestens drei möglichen Ventilstellungen (V1, V2, V3), welches einen hydraulischen Ventilantrieb (2) aufweist, der durch ein Übersetzungsmittel (3) mit dem Mehrfachventil (1) derart zusammen wirkt, dass die mindestens drei Ventilstellungen (V1, V2, V3) gezielt eingestellt werden können, wobei der hydraulische Ventilantrieb (2) einen Zylinder (10) aufweist, dessen Gehäuse (11) äußerlich verschiebbar gelagert ist, wobei im Inneren des Zylinders (10) zwei verschiebbare Ventilstempel (14, 15) vorgesehen sind, die durch Zugabe oder Entnahme von Hydraulikfluid in den Zylinder (10) in vorbestimmte Positionen (P1, P2, P3) gebracht werden können, so dass durch das Übersetzungsmittel (3), welches mit mindestens einem der beiden Ventilstempel (14, 15) wechselwirken kann, die mindestens drei möglichen Ventilstellungen (V1, V2, V3) des Mehrfachventils (1) gezielt eingestellt werden können.

## Beschreibung

Die vorliegende Erfindung betrifft ein Mehrfachventil mit mindestens drei möglichen Ventilstellungen, welches einen hydraulischen Ventilantrieb aufweist, der durch ein Übersetzungsmittel mit dem Mehrfachventil derart zusammenwirkt, dass die mindestens drei Ventilstellungen gezielt eingestellt werden können.

Mehrfachventile werden vielfach dort eingesetzt, wo etwa mehrere Rohrleitungen synchron für ein Nutzfluid geschaltet werden müssen. In anderen Worten kann mit einem Mehrfachventil gewährleistet werden, dass die einzelnen Rohrleitungen zur gleichen Zeit in der gleichen Art und Weise hinsichtlich ihrer Durchflusseigenschaften eingestellt werden können. Eine solche Schaltung ist bspw. bei Gasturbinen von Nutzen, bei welchen die einzelnen Brennstoffströme zu individuellen Brennern synchron und vergleichbar eingestellt werden müssen. Die Einzelströme müssen hierbei nicht nur synchron geschaltet werden, sondern auch in Bezug auf die Mengen und deren zeitlichen Verlauf aufeinander abgestimmt sein, so dass eine gewünschte Betriebszustandsänderung der Gasturbine bei einem vergleichbaren Betrieb aller Brenner resultiert.

Um diese Schaltung der Rohrleitungen kontrolliert umsetzen zu können, werden die Mehrfachventile mit einem hydraulischen Ventilantrieb versehen. Mit diesem Ventilantrieb können die notwendigen Schaltkräfte leicht bereitgestellt werden. Da zudem die Nutzung der Einzelströme in den jeweiligen Rohrleitungen zeitlich variabel sein kann, ist es erforderlich, dass das Mehrfachventil eine Mehrzahl an Ventilstellungen aufweist. So werden bspw. bei einer Gasturbine die Einzelströme der jeweiligen Rohrleitungen zeitlich angepasst, um den Nutzungsbedingungen der Brenner der Gasturbine Rechnung zu tragen. Folglich ist es erforderlich, dass das Mehrfachventil mindestens drei mögliche Ventilstellungen aufweist, um die notwendige Flexibilität beim Betrieb des Mehrfachventils gewährleisten zu können.

Werden derartige Mehrfachventile über einen einzigen hydraulischen Ventilantrieb betrieben, kann es sein, dass aufgrund von Verkantungen bzw. Verklemmungen eines Ventils die Schaltung des gesamten Mehrfachventils nicht mehr möglich ist. Vor allem, wenn die Ventileinstellung des Mehrfachventils wenigstens teilweise durch die Kraft geeignet vorgesehener Federn oder Rückstellmittel erreicht werden soll, kann das Mehrfachventil bei Problemen mit diesen Rückstellmitteln oder der Ventile mitunter nicht mehr alle möglichen Ventilstellungen anfahren.

Insbesondere die der Anmelderin durch den internen Stand der Technik bekannten Mehrfachventile weisen derartige Rückstellmittel auf, welche die Einstellung wenigstens einer der möglichen Ventilstellungen bewirken, ohne dass jedoch der hydraulische Ventilantrieb diese Ventilstellung direkt anfahren (=einstellen) würde. Ist nun dieses Rückstellmittel defekt, bzw. klemmen oder verkanten die beweglichen Bauteile beim Betrieb des Mehrfachventils, können die zur Verfügung gestellten Rückstellkräfte des Rückstellmittels möglicherweise nicht ausreichend sein, um die gewünschte Ventilstellung zu erreichen. Ebenso können die Rückstellmitteln durch Verschmutzung derartig schwergängig geworden sein, dass deren gezielte Verstellung nicht mehr kontrolliert erfolgen kann.

Insofern ergibt sich ein technisches Erfordernis, diese aus dem Stand der Technik bekannten Nachteile zu vermeiden, und ein Mehrfachventil vorzuschlagen, welches mit ausreichender Sicherheit kontrolliert die mindestens drei möglichen Ventilstellungen anzufahren, erlaubt. Insbesondere soll bei Versagen von ebenfalls möglicherweise vorgesehenen Rückstellmitteln eine Möglichkeit bestehen, dennoch die gewünschten Ventilstellungen anzufahren.

Diese aus dem Stand der Technik bekannten Nachteile werden vermieden durch die erfindungsgemäße Lösung gemäß Anspruch 1 sowie gemäß Anspruch 10 und 11.

Insbesondere sieht die Erfindungslösung ein Mehrfachventil mit mindestens drei möglichen Ventilstellungen vor, welches einen hydraulischen Ventilantrieb aufweist, die durch ein Übersetzungsmittel mit dem Mehrfachventil derart zusammenwirkt, dass die mindestens drei Ventilstellungen gezielt eingestellt werden können, wobei der hydraulische Ventilantrieb einen Zylinder aufweist, dessen Gehäuse äußerlich verschiebbar gelagert ist, wobei im Inneren des Zylinders zwei verschiebbare Ventilstempel vorgesehen sind, die durch Zugabe oder Entnahme von Hydraulikfluid in den Zylinder in vorbestimmte Positionen gebracht werden können, so dass durch das Übersetzungsmittel, welches mit mindestens einem der beiden Ventilstempel wechselwirken kann, die mindestens drei möglichen Ventilstellungen des Mehrfachventils gezielt eingestellt werden können.

Ebenfalls wird die der Erfindung zugrundeliegende Aufgabe gelöst durch eine Gasturbine, welche ein Mehrfachventil gemäß der Darstellung vorab, wie auch nachfolgend dargestellt, umfasst, wobei das Mehrfachventil zur Schaltung von flüssigem Brennstoff und/oder von Spülfluid für die Reinigung einer Brennstoffleitung vorgesehen ist.

Weiterhin werden die der Erfindung zugrundeliegenden Aufgaben gelöst durch ein Verfahren zum Betrieb eines Mehrfachventils gemäß der vorhergehenden, wie auch nachfolgenden Beschreibung, welches folgende Schritte umfasst:
- Zugeben oder Entnehmen von Hydraulikfluid in den Zylinder unter Betätigung von wenigstens einem Ventilstempel;
- Einstellen des Übersetzungsmittels in eine von mindestens drei möglichen Ventilstellungen des Mehrfachventils durch die Betätigung des wenigstens einen Ventilstempels.

Die der Erfindung zugrundeliegende Lösung beruht also auf einem hydraulischen Ventilantrieb, welcher einen Zylinder aufweist, dessen Gehäuse äußerlich verschiebbar gelagert ist. Im Inneren des Zylinders sind zudem zwei Ventilstempel vorgesehen, so dass der hydraulische Ventilantrieb insgesamt mindestens drei Freiheitsgrade aufweist, die zur Einstellung der mindestens drei möglichen Ventilstellungen genutzt werden können. Durch gezielte Zugabe oder Entnahme von Hydraulikfluid in den Zylinder können also die verschiebbaren Ventilstempel in geeignete Positionen gebracht werden, so dass das Übersetzungsmittel, welches mit mindestens einem der beiden Ventilstempel wechselwirkt, eine der mindestens drei möglichen Ventilstellungen gezielt durch die Aufwendung von hydraulischen Kräften eingestellt werden kann. Insbesondere kann damit auf das Vorsehen von Rückstellmitteln, wie etwa Rückstellfedern, verzichtet werden.

Vielmehr ist vorgesehen, dass in dem erfindungsgemäßen Mehrfachventil alle mindestens drei möglichen Ventilstellungen allein durch hydraulische Maßnahmen eingestellt werden können. Sollte das Mehrfachventil mehr als drei Ventilstellungen aufweisen, ist es zudem etwa möglich, die Zugabe bzw. Entnahme von Hydraulikfluid in den Zylinder des hydraulischen Ventilantriebs mengenmäßig bzw. drucktechnisch gezielt einzustellen, so dass aufgrund der daraus resultierenden Positionen der verschiebbaren Ventilstempel bzw. des Gehäuses all die erforderlichen Ventilstellungen erreicht werden können.

Ist vorgesehen, dass das Mehrfachventil genau drei mögliche Ventilstellungen aufweist, können die jeweils endständigen Positionen der Ventilstempel in dem Zylinder für eine geeignete Einstellung der Position der Ventilstempel sorgen. Insofern ist besonders bevorzugt vorgesehen, dass das erfindungsgemäße Mehrfachventil genau drei Ventilstellungen aufweist.

Gemäß einer ersten besonders bevorzugten Ausführungsform des erfindungsgemäßen Mehrfachventils ist vorgesehen, dass der Zylinder als Doppelzylinder ausgebildet ist, welcher zwei fluidtechnisch getrennte Kammern aufweist, wobei jeder Kammer jeweils ein Ventilstempel zugeordnet ist und wobei jede Kammer eine Zuleitung und eine Ableitung für Hydraulikfluid aufweist. Zuleitung und Ableitung können hierbei unterschiedlich sein oder auch identisch. Aufgrund der Unterteilung des Zylinders in zwei fluidtechnisch getrennte Kammern sind die jeweils endständigen Positionen der verschiebbaren Ventilstempel in dem Zylinder klar definiert, so dass die Zuleitung bzw. Abteilung des Hydraulikfluids in den Zylinder nicht hinsichtlich der Menge an Hydraulikfluid gesteuert werden muss, sondern in Bezug auf die Stellung des Ventilstempels in der jeweiligen Kammer. Es ist also ausreichend, soweit Hydraulikfluid in die Kammer zuzuleiten bzw. aus ihr abzuleiten, bis die Ventilstempel jeweils in einer endständigen Position sind, und damit aufgrund der Wechselwirkung mit dem Übersetzungsmittel eine der mindestens drei möglichen Ventilstellungen angefahren werden kann.

Gemäß einer weiteren vorteilhaften Ausführungsform der Erfindung ist vorgesehen, dass der Zylinder endständig einseitig oder beidseitig geschlossen ist. Durch den endständigen Verschluss ist die endständige Position des Ventilstempels klar definiert, so dass eine einfache und genaue Einstellung der verschiebbaren Ventilstempel in dem Zylinder erfolgen kann. Ein solcher endständiger Verschluss kann aber alternativ auch durch geeignete Stoppelemente ersetzt sein, wobei dann der Zylinder nicht endständig verschlossen sein muss.

Gemäß einer alternativen Ausführungsform kann vorgesehen sein, dass der Zylinder endständig nicht geschlossen ist. Auch in diesem Fall kann eine gezielte Einstellung der Position des verschiebbaren Ventilstempels erfolgen, wobei jedoch aufgrund der gezielten Zuführung oder Abführung von Hydraulikfluid in den Zylinder bzw. mittels weiterer nicht weiter beschriebener Bauteile verhindert werden muss, so dass der Ventilstempel aus dem Zylinder herausfallen könnte. Es ist beispielsweise möglich, endständig an dem Zylinder Materialvorsprünge (z.B. Stoppelemente) vorzusehen, die verhindern, dass der Ventilstempel aus dem Zylinder herausfällt. Gleichzeitig können diese Materialvorsprünge eine vorteilhafte Gegenkraft auf den Zylinder aufbringen, um diesen in einer definierten endständigen Position zu halten.

Gemäß einer bevorzugten Ausführungsform der Erfindung ist weiterhin vorgesehen, dass einer der beiden Ventilstempel mechanisch mit dem Übersetzungsmittel verbunden ist. Ein solches Übersetzungsmittel kann etwa eine Übersetzungsstange sein, die mit den einzelnen Ventilen des Mehrfachventils zur gezielten Einstellung wechselwirken kann. Das Übersetzungsmittel kann aber auch beispielsweise eine gelenkige Pleuelstange sein, mittels welcher richtungsändernde Kräfte übertragen werden können. Aufgrund der mechanischen Verbindung von Ventilstempel und Übersetzungsmittel können die hydraulischen Kräfte, welche auf den Ventilstempel wirken, direkt auf das Übersetzungsmittel übertragen werden, so dass eine weitgehend verlustarme Einbringung der hydraulischen Kräfte in die Ventile zur Einstellung derselben übertragen werden kann.

Gemäß einer weiteren vorteilhaften Ausführungsform der Erfindung ist vorgesehen, dass der Ventilstempel, welcher nicht mit dem Übersetzungsmittel verbunden ist, räumlich fest angeordnet ist. Aufgrund der räumlich festen Anordnung kann sich das Gehäuse des Zylinders relativ zu diesem Ventilstempel verschieben. Verschiebt sich gleichzeitig noch der andere, räumlich nicht feste Ventilstempel, kann so eine Anzahl an Freiheitsgraden zur Einstellung der Ventile des Mehrfachventils bereitgestellt werden, die mindestens drei Möglichkeiten umfasst.

Weiterhin kann vorgesehen sein, dass der Zylinder, welcher äußerlich verschiebbar gelagert ist, auf einem Gleitlager gelagert ist. Infolgedessen kann die Zylinderposition ebenfalls gezielt und kontrolliert eingestellt werden, wodurch auch mindestens drei mögliche Ventilstellungen kontrolliert angefahren werden können. Alternativ zu einem Gleitlager ist auch die Lagerung etwa auf einem geeigneten Rollenlager möglich. Gemäß einer anderen Ausführungsform der Erfindung kann das Mehrfachventil wenigstens eine Rückstellfeder aufweisen, welche direkt oder indirekt mit den Übersetzungsmitteln zusammenwirkt und die Einstellung einer bzw. mindestens einer Ventilstellung unterstützen kann. Die Rückstellfeder ist folglich nicht ausschließlich zur Aufbringung der Rückstellkraft vorgesehen, welche auf das Mehrfachventil übertragen werden muss, um die Einstellung einer bevorzugten Ventilstellung zu erreichen. Die Rückstellfeder dient lediglich unterstützend zur Einstellung der Ventile, so dass bei ungestörtem Betrieb des hydraulischen Ventilantriebs vorbestimmte Ventilstellungen leichter vorgenommen werden können.

Weiterhin kann vorgesehen sein, dass das Mehrfachventil als Ventilblock ausgebildet ist, welcher mindestens drei, bevorzugt aber mehr als neun Ventile aufweist. Das Mehrfachventil erlaubt also nicht nur die Einstellung von drei unterschiedlichen Ventilstellungen, sondern ermöglicht auch die Aufteilung eines Gesamtstroms an Nutzfluid in mindestens drei Einzelströme, welche durch die betreffenden Ventile vorgegeben werden können. Die betreffenden Ventile sind hierbei besonders als Scheibendrehventile ausgebildet, wobei jedoch jede Art von anderer Ausführungsform berücksichtigt werden kann. Die Ausbildung des Mehrfachventils als Ventilblock, ermöglicht eine kompakte Bauart, welche nicht nur platzsparend sondern auch besonders materialsparend ist. Das Ventil weist hierbei etwa einzelne Ventile auf, die in vorbestimmte Bohrungen des Ventilblocks eingesetzt sein können.

Nachfolgend soll die Erfindung anhand einzelner Figuren im Einzelnen dargestellt werden. Hierbei ist darauf hinzuweisen, dass die gezeigten technischen Merkmale lediglich schematisch zu verstehen sind, aber keine Einschränkung hinsichtlich der Ausführbarkeit darstellen.

Weiterhin ist darauf hinzuweisen, dass alle technischen Merkmale, die mit gleichen Bezugszeichen versehen sind, gleiche technische Wirkung aufweisen sollen.

Zudem ist darauf hinzuweisen, dass alle beliebigen Kombinationen der nachfolgend dargestellten technischen Merkmale beansprucht werden sollen, soweit diese Kombinationen die der Erfindung zugrundeliegende Erfindungsaufgabe lösen können.

Hierbei zeigen:
- FIG 1: eine Ausführungsform eines Mehrfachventils mit hydraulischem Ventilantrieb, so wie es aus internen dem Stand der Technik bekannt ist, in einer schematischen Schaltansicht von der Seite;
- FIG 2: eine erste Ausführungsform des erfindungsgemäßen Mehrfachventils mit hydraulischem Ventilantrieb in einer schematischen Schaltansicht von der Seite;
- FIG 3: eine flussdiagrammatische Darstellung einer Ausführungsform des erfindungsgemäßen Verfahrens zum Betreiben eines solchen Mehrfachventils.

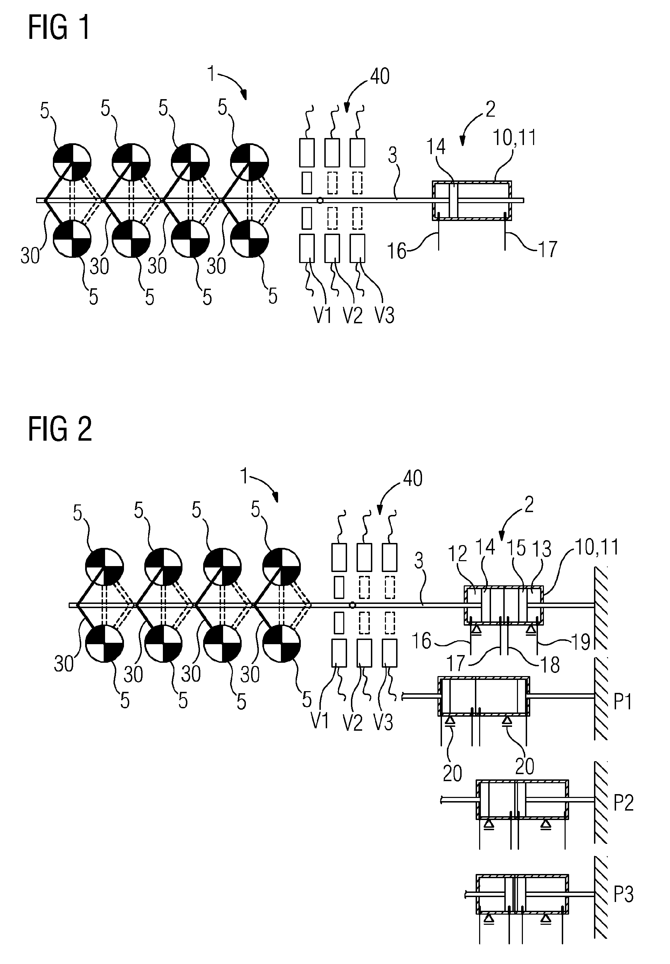

FIG 1 zeigt eine Ausführungsform eines aus dem Stand der Technik bekannten Mehrfachventils mit drei möglichen Ventilstellungen V1, V2 und V3, welches einen hydraulischen Ventilantrieb 2 hat, der durch eine als Stange ausgeführtes Übersetzungsmittel 3 mit den einzelnen Ventilen des Mehrfachventils 1 derart zusammenwirkt, dass die drei Ventilstellungen V1, V2, V3 gezielt eingestellt werden können. Das Mehrfachventil 1 weist hierbei insgesamt acht Ventile auf, die als Drehscheibenventile ausgebildet sind. Zwischen jeweils zwei benachbarten Ventilen 5 ist zudem ein Verbindungsmittel 30 vorgesehen, das ebenfalls an das Übersetzungsmittel 3 angelenkt ist und somit eine synchronisierte Bewegung von Übersetzungsmittel 3 und Verbindungsmittel 30 ermöglicht.

Weiterhin umfassen die gezeigten Ventile 5 jeweils eine integrierte Rückstellfeder, die vorliegend nicht gezeigt sind.

Der hydraulische Ventilantrieb 2 ist als Zylinder 10 ausgebildet, der ein ortfestes Gehäuse 11 aufweist, sowie einen in dem Zylinder 10 verschiebbaren Ventilstempel 14. Der Zylinder 10 ist als Einfachzylinder ausgebildet, in welchem der Ventilstempel 14 zwischen den durch die endständigen Begrenzungen des Zylinders 10 definierten Extremalpositionen bewegt werden kann. Zur Bewegung des Ventilstempels 14 wird über eine Zuleitung 16 bzw. Ableitung 17 (bzw. umgekehrt) Hydraulikfluid in den Zylinder 10 zugeführt bzw. abgeführt, und zwar in dem Maße, dass eine kontrollierte Bewegung des Ventilstempels 14 erfolgt.

Um die genaue Ventilstellung V1, V2, V3 bestimmen zu können, ist weiterhin eine Positionserfassung 40 vorgesehen, welche beispielsweise über geeignete Sensoren, die den jeweiligen Ventilstellungen V1, V2, V3 zugeordnet sind, das Erreichen einer gewünschten Ventilstellung V1, V2, V3 anzeigen können. Hierzu kann etwa auf dem als Stange ausgebildeten Übersetzungsmittel 3 ein nicht weiter mit Bezugszeichen versehenes Merkmal ausgebildet sein, welches die Erfassung mittels der Sensoren der Positionserfassung 40 erlaubt.

Soll beispielsweise nun eine Ventilstellung V1 eingestellt werden, ist zu gewährleisten, dass der Ventilstempel 14 durch geeignete Zufuhr bzw. Abfuhr von Hydraulikfluid in den Zylinder 10 in eine endständige Extremalposition verfahren wird, in welcher der Ventilstempel 14 an der in der Zeichnung gezeigten linken endständigen abschließenden Wandung des Zylinders 10 anliegt. Dadurch werden die nicht weiter gezeigten Rückstellfedern vermittelt durch die jeweiligen Verbindungsmittel 30 vorgespannt, und gleichzeitig die Ventile 5 in eine Ventilstellung V1 überführt. Soll nun von dieser Ventilstellung V1 in die Ventilstellung V3 gewechselt werden, ist wiederum mittels des hydraulischen Ventilantriebs 2 zu gewährleisten, dass ein entsprechendes Verfahren des als Stange ausgebildeten Übersetzungsmittels 3 erfolgt. Hierzu ist der Ventilstempel 14, welcher mit dem Übersetzungsmittel 3 mechanisch verbunden ist, in die entsprechend andere Extremalposition des Zylinders 10 zu verfahren. Der Zylinder 10 verbleibt hierbei während des gesamten Vorganges räumlich unbewegt. Lediglich die Einstellung des Ventilstempels 14 bewirkt ein Verfahren des Übersetzungsmittels 3.

Soll nun die weitere Ventilposition V2 eingestellt werden, kann der unter Hydraulikdruck stehende Zylinder 10 druckentlastet werden, wobei die nicht weiter gezeigten Rückstellfedern vermittelt durch die jeweiligen Verbindungsmittel 30 im Normalfall ausreichend Rückstellkraft bereitstellen, um über das Übersetzungsmittel 3 die Ventilposition V2 anfahren zu können, wobei der Ventilstempel 14 in dem Zylinder 10 in eine mittlere Position verfahren wird.

Wie weiter oben ausgeführt, erweist es sich jedoch als nachteilig, dass die nicht weiter gezeigten Rückstellfedern mitunter bei Verkanten etwa eines der Ventile 5 bereits eine nicht mehr ausreichende Rückstellkraft aufbringen können, um die Ventilstellung V2 anfahren zu können. Ebenfalls können die mechanischen Bauteile soweit verunreinigt sein, dass diese nur noch sehr schwergängig sind. Folglich ist ein Wartungseingriff erforderlich, der mitunter zum Stillstand der gesamten Anlage, welche das Mehrfachventil nutzt, führen kann.

Insofern erweist es sich als technisch notwendig, eine verbesserte Form des hydraulischen Ventilantriebs 2 anzugeben, welcher eben nicht auf die Rückstellung mittels der Rückstellfedern angewiesen ist.

Diese erfindungsgemäße Lösung wird in FIG 2 gezeigt, wobei auch hier wiederum das gezeigte Mehrfachventil 1 insgesamt acht Einzelventile umfasst, die mittels eines als Stange ausgebildeten Übersetzungsmittels 3 gezielt eingestellt werden können. Ebenfalls gezeigt sind die Verbindungsmittel 30 , welche zwischen der Bewegung des Übersetzungsmittels 3 und der betreffenden Ventile 5 vermitteln. Die weiterhin möglicherweise vorhandenen, aber wiederum nicht gezeigten Rückstellfedern in den jeweiligen Ventilen 5 haben jedoch nun nicht mehr eine ausschließliche Funktion bei der Einstellung der Ventilstellung V2, sondern dienen höchstens noch unterstützend, etwa um im Falle des Ausfalls der Hydraulik entsprechend genutzt werden zu können. In anderen Ausführungsformen kann auch auf die Rückstellfedernauch vollständig verzichtet werden.

Gemäß der vorliegenden Ausführungsform der Erfindung ist nun vorgesehen, dass der Zylinder 10 des Ventilantriebs 2 zwei voneinander fluidtechnisch getrennte Kammern 12 und 13 aufweist. Beide Kammern sind durch eine Wandung voneinander getrennt, wobei die jeweiligen Kammern 12 und 13 mit einem Ventilstempel 14 und 15 versehen sind. Der Ventilstempel 14, welcher mit dem als Stange ausgebildeten Übersetzungsmittel 3 wechselwirkt, ist mit dem Übersetzungsmittel 3 beispielsweise direkt verbunden. Gleichzeitig kann eine geeignete Durchführung für das Übersetzungsmittel 3 durch die endständige Wandung mit einer Dichtung versehen sein. Der andere Ventilstempel 15 wiederum ist räumlich fixiert und sorgt in erster Linie für eine Verschiebung des auf einem Gleitlager 20 gelagerten Gehäuses 11 des Zylinders 10. Hierbei ist darauf zu achten, dass die Lagerung auf dem Gleitlager 20 ausreichend eben und gleichmäßig verläuft, um ein Verkanten der Ventilstempel 14 und 15 zu vermeiden.

Ist die Kammer 12 mit einer Zuleitung 16 und einer Ableitung 17 versehen, so ist die andere Kammer 13 ebenfalls mit einer Zuleitung 18 und einer Ableitung 19 für Hydraulikfluid versehen. Über diese Zuleitungen 16, 18 bzw. Ableitungen 17, 19 kann in den Zylinder 10 gezielt Hydraulikfluid eingeführt werden bzw. abgelassen werden, so dass die Bewegung der jeweiligen Ventilstempel 14 und 15 relativ zu dem Zylinder 10 erfolgen kann.

Ebenfalls in FIG 2 gezeigt sind nun drei Extremalpositionen P1, P2 und P3 der Ventilstempel 14 und 15, welche mit den jeweils anzufahrenden Ventilstellungen V1, V2 und V3 korrespondieren. Insofern korrespondiert beispielsweise die erste Position P1 mit der Ventilstellung V1, die zweite Position P2 mit der zweiten Ventilstellung V2 und die dritte Position P3 mit der Ventilstellung V3. Zur Einstellung der ersten Ventilstellung V1 ist der räumlich fixierte Ventilstempel 15 relativ zum Gehäuse 11 des Zylinders 10 in eine Extremalposition zu verfahren, so dass der Ventilstempel 15 an der den Zylinder 10 endständig begrenzenden Wandung anliegt. Gleichzeitig wird das Hydraulikfluid in der Kammer 14 derart eingestellt, dass der Ventilstempel 14 ebenfalls eine Extremalposition in der Kammer 14 einnimmt, so dass der Ventilstempel 14 ebenfalls an der den Zylinder 10 endständig abgrenzenden Wandung anliegt. Soll nun das Mehrfachventil in die zweite Ventilstellung V2 überführt werden, ist lediglich das Hydraulikfluid in der Kammer 13 insoweit zu ändern, dass der räumlich fixierte Ventilstempel 15 in eine zweite Extremalposition verfahren wird, in welcher der Ventilstempel 15 an der die beiden Kammern 12 und 13 trennenden Wandung anliegt. Soll nun in einem weiteren Schritt die dritte Ventilstellung V3 angefahren werden, ist nun lediglich der Ventilstempel 14 in der Kammer 12 zu verfahren, so dass auch dieser endständig an der die beiden Kammern 12 und 13 trennenden Wandung anliegt. Ändert sich die räumliche Position des Zylinders 10 bei Verfahren zwischen den beiden Ventilstellungen V1 und V2 durch eine gleitende Bewegung, so bleibt der Zylinder 10 ortsfest bei der Änderung von Ventilstellung V2 zu Ventilstellung V3.

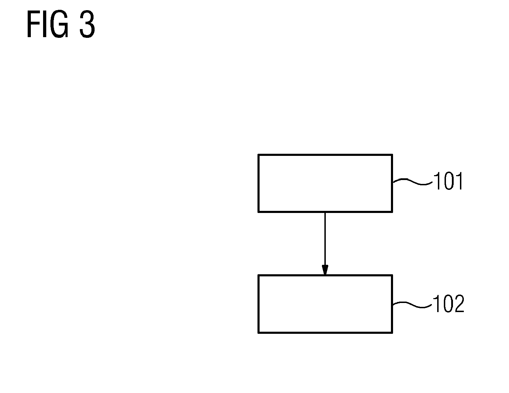

FIG 3 zeigt eine flussdiagrammatische Darstellung einer Ausführungsform des erfindungsgemäßen Verfahrens zum Betreiben eines vorab dargestellten Mehrfachventils 1, welches folgende Schritte aufweist:
- Zugeben oder Entnehmen von Hydraulikfluid in den Zylinder unter Betätigung von wenigstens einem Ventilstempel (erster Verfahrensschritt 101);
- Einstellen des Übersetzungsmittels in eine von mindestens drei mögliche Ventilstellungen V1, V2, V3 des Mehrfachventils durch die Betätigung des wenigstens einen Ventilstempels (zweiter Verfahrensschritt 102).

Weitere Ausführungsformen ergeben sich aus den Unteransprüchen.

## Patentansprüche

1. Mehrfachventil (1) mit mindestens drei möglichen Ventilstellungen (V1, V2, V3), welches einen hydraulischen Ventilantrieb (2) aufweist, der durch ein Übersetzungsmittel (3) mit dem Mehrfachventil (1) derart zusammen wirkt, dass die mindestens drei Ventilstellungen (V1, V2, V3) gezielt eingestellt werden können,
**dadurch gekennzeichnet, dass**
der hydraulische Ventilantrieb (2) einen Zylinder (10) aufweist, dessen Gehäuse (11) äußerlich verschiebbar gelagert ist, wobei im Inneren des Zylinders (10) zwei verschiebbare Ventilstempel (14, 15) vorgesehen sind, die durch Zugabe oder Entnahme von Hydraulikfluid in den Zylinder (10) in vorbestimmte Positionen (P1, P2, P3) gebracht werden können, so dass durch das Übersetzungsmittel (3), welches mit mindestens einem der beiden Ventilstempel (14, 15) wechselwirken kann, die mindestens drei möglichen Ventilstellungen (V1, V2, V3) des Mehrfachventils (1) gezielt eingestellt werden können.

2. Mehrfachventil nach Anspruch 1,
**dadurch gekennzeichnet, dass**
der Zylinder (10) als Doppelzylinder ausgebildet ist, welcher zwei fluidtechnisch getrennte Kammern (12, 13) aufweist, wobei jeder Kammer (12, 13) jeweils ein Ventilstempel (14, 15) zugeordnet ist, und wobei insbesondere jede Kammer (12, 13) eine Zuleitung (16, 18) und eine Ableitung (17, 19) für Hydraulikfluid aufweist.

3. Mehrfachventil nach einem der vorhergehenden Ansprüche,
**dadurch gekennzeichnet, dass**
der Zylinder (10) endständig einseitig oder beidseitig geschlossen ist.

4. Mehrfachventil nach einem der vorhergehenden Ansprüche 1 oder 2,
**dadurch gekennzeichnet, dass**
der Zylinder (10) endständig nicht geschlossen ist.

5. Mehrfachventil nach einem der vorhergehenden Ansprüche,
**dadurch gekennzeichnet, dass**
einer der beiden Ventilstempel (14, 15) mechanisch mit dem Übersetzungsmittel (3) verbunden ist.

6. Mehrfachventil nach Anspruch 5,
**dadurch gekennzeichnet, dass**
der Ventilstempel (14, 15), welcher nicht mit dem Übersetzungsmittel (3) verbunden ist, räumlich fest angeordnet ist.

7. Mehrfachventil nach einem der vorhergehenden Ansprüche,
**dadurch gekennzeichnet, dass**
der Zylinder (10) äußerlich auf einem Gleitlager (20) gelagert ist.

8. Mehrfachventil nach einem der vorhergehenden Ansprüche,
**dadurch gekennzeichnet, dass**
das Mehrfachventil (1) wenigstens eine Rückstellfeder aufweist, welche mit dem Übersetzungsmittel (3) direkt oder indirekt zusammenwirkt und die Einstellung einer der Ventilstellungen (V1, V2, V3) unterstützen kann.

9. Mehrfachventil nach einem der vorhergehenden Ansprüche,
**dadurch gekennzeichnet, dass**
das Mehrfachventil (1) als Ventilblock ausgebildet ist, welcher mindestens drei, bevorzugt aber mehr als neun Ventile (5) aufweist.

10. Gasturbine umfassend ein Mehrfachventil (1) gemäß einem der vorhergehenden Ansprüche, wobei das Mehrfachventil (1) zur Schaltung von flüssigem Brennstoff und/oder Spülfluid für die Reinigung einer Brennstoffleitung vorgesehen ist.

11. Verfahren zum Betreiben eines Mehrfachventils (1) nach einem der vorhergehenden Ansprüche 1 bis 9, umfassend die folgenden Schritte:
- Zugeben oder Entnehmen von Hydraulikfluid in den Zylinder (10) unter Betätigung von wenigstens einem Ventilstempel (14, 15);
- Einstellen des Übersetzungsmittels (3) in eine von mindestens drei möglichen Ventilstellungen (V1, V2, V3) des Mehrfachventils (1) durch die Betätigung des wenigstens einen Ventilstempels (14, 15).
